# EUROPEAN PATENT APPLICATION

(11) **EP 4 796 511 A1**
(43) Date of publication of application: **26.08.2026**
(21) Application number: 24897229.1
(22) Date of filing: 06.11.2024
(51) Int. Cl.: C04B 24/04, C04B 14/10, C04B 14/16, C04B 18/08, C04B 18/14, C04B 28/02, C04B 40/02, C04B 103/14

(54) **HIGH-EARLY-STRENGTH MATERIAL, HIGH-EARLY-STRENGTH CEMENT COMPOSITION, HIGH-EARLY-STRENGTH MORTAR, HIGH-EARLY-STRENGTH CONCRETE, HIGH-EARLY-STRENGTH MORTAR CURED PRODUCT, HIGH-EARLY-STRENGTH CONCRETE CURED PRODUCT**

(30) Priority: 30.11.2023 JP 2023202937
(71) Applicant: Denka Company Limited, Tokyo 103-8338 (JP)
(72) Inventor: TANAKADATE, Yuto, Tokyo 103-8338 (JP); AIZAWA, Kazuhiro, Tokyo 103-8338 (JP); HIGUCHI, Takayuki, Tokyo 103-8338 (JP)
(74) Representative: Viering, Jentschura & Partner mbB Patent- und Rechtsanwälte
(86) International application number: PCT/JP2024/039405
(87) International publication number: WO 2025/115541

(57) **Abstract**

A high early strength material contains a calcium formate-based powder having a particle diameter (D90) at a cumulative volume of 90% in a cumulative volume particle size distribution measured by a laser diffraction scattering method of 1,200 µm or less.

## Description

### Technical Field

The present invention relates to a high early strength material, a high early strength cement composition containing a high early strength material, a high early strength mortar and a high early strength concrete containing a high early strength cement composition, and hardened bodies of a high early strength mortar and a high early strength concrete.

### Background Art

A hydraulic material such as a cement used in civil engineering and construction fields typically hardens by being mixed with water and left to stand for a predetermined period. The hardening rate of the hydraulic material can also be affected by the ratio of a material and water, the ambient environmental temperature, and the curing method, but by using a specific admixture, the time required for the hydraulic material to harden can be shortened.

Shortening the time required for the hydraulic material to harden leads to improved productivity at a worksite. For example, a concrete hardened body used in a precast method for reinforced concrete buildings and the like, can generally be obtained by pouring a cement composition into a mold, leaving the cement composition to stand for a predetermined period, and then further curing the cement composition by steam curing and the like to obtain a hardened body, but by using a hardening accelerator, the time required to reach an initial strength necessary for demolding can be shortened, so that the hardened body can be efficiently produced.

For example, Patent Literature 1 discloses a hardening accelerator for a hydraulic material, containing predetermined amounts of an inorganic sulfate, calcium sulfoaluminate, and an inorganic hydroxide. Patent Literature 2 discloses a cement admixture containing calcium sulfoaluminate having a Blaine specific surface area value of 4000 cm²/g or more, and one or two or more selected from the group consisting of a formate, an acetate, and a lactate.

### Citation List

### Patent Literature

Patent Literature 1: JP 2014-19618 A
Patent Literature 2: JP 2010-235399 A

### Summary of Invention

### Technical Problem

However, the hydraulic material using the admixture as described above may lose fluidity immediately after being kneaded with water or may have poor finishability.

From the above, an object of the present invention is to provide a high early strength material capable of improving fluidity retention, setting property, and finishability.

### Solution to Problem

As a result of intensive studies to solve the above problems, the present inventors have found that the problems can be solved by a high early strength material containing a calcium formate-based powder having a specific particle size distribution, leading to the present invention. That is, the present invention is as follows.

[1] A high early strength material containing a calcium formate-based powder having a particle diameter (D90) at a cumulative volume of 90% in a cumulative volume particle size distribution measured by a laser diffraction scattering method of 1,200 µm or less.
[2] A high early strength cement composition containing the high early strength material according to [1] and a cement.
[3] The high early strength cement composition according to [2], further containing at least one selected from a group consisting of slag, silica fume, metakaolin, allophane, and fly ash.
[4] A high early strength mortar containing the high early strength cement composition according to [2] or [3].
[5] A high early strength concrete containing the high early strength cement composition according to [2] or [3].
[6] A high early strength mortar hardened body obtained by hardening the high early strength mortar according to [4].
[7] A high early strength concrete hardened body obtained by hardening the high early strength concrete according to [5].
[8] A method for producing a hardened body, the method including hardening a high early strength cement composition containing the high early strength material according to [1] by steam curing at a maximum temperature of 40 to 80°C for 2 to 8 hours.

### Advantageous Effects of Invention

According to the present invention, it is possible to provide a high early strength material capable of improving fluidity retention, setting property, and finishability.

### Description of Embodiments

Hereinafter, an embodiment of the present invention (present embodiment) will be described in detail, but the present invention is not limited to the embodiment. Note that "%" and "part(s)" in the present description are on a mass basis unless otherwise specified.

### [High early strength material]

A high early strength material according to the present embodiment contains a calcium formate-based powder having a particle diameter (D90) at a cumulative volume of 90% in a cumulative volume particle size distribution measured by a laser diffraction scattering method of 1,200 µm or less. The high early strength material not only accelerates hardening when a hydraulic substance such as a cement hardens by being kneaded with water, but in some cases, the high early strength material itself may also harden while accelerating the hardening. The cumulative volume particle size distribution can be measured using a particle measuring apparatus (manufactured by HORIBA, Ltd.: Laser Diffraction/Scattering Particle Size Distribution Analyzer LA-960 series, or the like).

### (Calcium formate-based powder)

The calcium formate-based powder contained in the high early strength material of the present invention has a particle diameter (D90) at a cumulative volume of 90% in a cumulative volume particle size distribution measured by a laser diffraction scattering method of 1,200 µm or less. In the present invention, the calcium formate-based powder is a powder in which calcium formate is the main component of each particle. When the D90 of the calcium formate-based powder is more than 1,200 µm, the fluidity retention, setting property, and finishability may be poor. The D90 of the calcium formate-based powder is preferably 1000 µm or less, more preferably 800 µm or less, and still more preferably 500 µm or less. When the D90 of the calcium formate-based powder is within the above range, it is easy to improve the fluidity retention, setting property, and finishability.

The calcium formate-based powder has a particle diameter (D50: median diameter) at a cumulative volume of 50% in a cumulative volume particle size distribution measured by a laser diffraction scattering method of preferably 100 to 400 µm, more preferably 120 to 300 µm, and still more preferably 150 to 250 µm. When the median diameter of the calcium formate-based powder is within the above range, it is easy to improve the fluidity retention, setting property, and finishability.

The calcium formate-based powder contained in the high early strength material of the present invention preferably contains SrO as a chemical component in an amount of 0.001 to 0.1 mass%, more preferably 0.01 to 0.08 mass%, and still more preferably 0.02 to 0.05 mass%. When the SrO content in the calcium formate-based powder is within the above range, it is easy to improve the fluidity retention. The SrO raw material is not particularly limited, and examples thereof include celestite, strontianite, strontium oxide, and strontium carbonate, and the SrO content can be adjusted by using these. In the present invention, the expression "as a chemical component" refers to a state of being solid-solved in calcium formate, which can be checked using X-ray fluorescence analysis (XRF) and X-ray diffractometry (XRD). When a peak corresponding to SrO is not observed by XRD and a peak corresponding to SrO is observed by XRF, it can be determined that SrO is in a solid solution state in calcium formate, and further, the content can be measured. XRF can be performed using an X-ray fluorescence analyzer (manufactured by Rigaku Corporation: X-ray fluorescence analyzer ZSX100e or the like), and XRD can be performed using a powder X-ray diffractometer (manufactured by Rigaku Corporation: SmartLab or the like).

The calcium formate-based powder preferably contains MnO as a chemical component in an amount of 0.001 to 0.1 mass%, more preferably 0.01 to 0.08 mass%, and still more preferably 0.02 to 0.05 mass%. When the MnO content in the calcium formate-based powder is within the above range, it is easy to improve the fluidity retention. The MnO raw material is not particularly limited, and examples thereof include hausmannite, rhodochrosite, tephroite, manganite, and rhodonite, and the MnO content can be adjusted by using these.

The high early strength material preferably contains the calcium formate-based powder in an amount of 0.01 to 5.0 mass%, more preferably 0.1 to 4.0 mass%, and still more preferably 0.5 to 3.0 mass%. When the content of the calcium formate-based powder is within the above range, it is easy to improve the fluidity retention, setting property, and finishability.

The high early strength material preferably further contains an inorganic calcium compound. As the inorganic calcium compound, calcium sulfate, calcium hydroxide, calcium carbonate, calcium oxide, or the like can be used, and from the viewpoint of initial strength development, it is preferable to use calcium sulfate, calcium hydroxide, and/or calcium oxide, and it is more preferable to use calcium sulfate. When calcium sulfate is used, it is preferably anhydrous.

The high early strength material preferably contains the inorganic calcium compound in an amount of 15 to 70.0 mass%, more preferably 18.0 to 60.0 mass%, and still more preferably 20.0 to 40.0 mass%. When the content of the inorganic calcium compound is within the above range, it is easy to improve the fluidity retention, setting property, and finishability.

The high early strength material preferably further contains an inorganic sulfate. As the inorganic sulfate, sodium sulfate, aluminum sulfate, sodium thiosulfate, potassium alum, or the like can be used, and from the viewpoint of initial strength development, it is preferable to use a sulfate and/or a thiosulfate, it is more preferable to use sodium sulfate, aluminum sulfate, sodium thiosulfate, and/or potassium alum, it is still more preferable to use sodium sulfate and/or aluminum sulfate, and above all, from the viewpoint of improving the fluidity retention, it is even more preferable to use sodium sulfate. When sodium sulfate is used, it is preferably anhydrous.

The high early strength material preferably contains the inorganic sulfate in an amount of 0.5 to 30.0 mass%, more preferably 1.0 to 25.0 mass%, and still more preferably 3.0 to 15.0 mass%. When the content of the inorganic sulfate is within the above range, it is easy to improve the fluidity retention, setting property, and finishability.

The high early strength material preferably further contains calcium sulfoaluminate. The calcium sulfoaluminate is a general term for hydraulic substances and hydrated salts represented by the chemical formula xCaO·yAl₂O₃·zCaSO₄·mH₂O (x, y, and z are positive real numbers other than 0, and m is 0 or a positive real number), and examples thereof include AFt phase represented by ettringite (3CaO·Al₂O₃·3CaSO₄·32H₂O), AFm phase represented by monosulfate (3CaO·Al₂O₃·CaSO₄·12H₂O), and those in which the AFt phase and the AFm phase coexist, in addition to hauynite (3CaO·3Al₂O₃·CaSO₄). The calcium sulfoaluminate may be amorphous. A part of Al₂O₃ may be substituted with a trace amount of Fe₂O₃, SiO₂, or the like, and a part of CaSO₄ may be substituted with Ca(OH)₂, CaCO₃, or the like. In the present invention, in the chemical formula xCaO·yAl₂O₃·zCaSO₄·mH₂O, from the viewpoint of fluidity retention and the risk of a decrease in strength during hardening due to phase transition, z cannot be set to 0.

The high early strength material preferably contains calcium sulfoaluminate in an amount of 4.5 to 65.0 mass%, more preferably 15.0 to 60.0 mass%, and still more preferably 30.0 to 50.0 mass%. When the content of calcium sulfoaluminate is within the above range, it is easy to improve the fluidity retention, setting property, and finishability.

### [High early strength cement composition]

A high early strength cement composition according to the present embodiment contains the high early strength material of the present invention and a cement.

The cement is not particularly limited, and examples thereof include various types of portland cements such as ordinary, high early strength, ultra-high early strength, low-heat, and moderate-heat portland cements, various types of mixed cements obtained by mixing blast furnace slag, fly ash, silica fume, metakaolin, allophane, or the like with these portland cements, environmentally friendly cements (eco cements) produced using urban waste incineration ash or sewage sludge incineration ash as a raw material, commercially available fine-particle cements, and white cement, and it is also possible to use various types of cements in a finely powdered form. It is also possible to use those which are adjusted by increasing or decreasing the amounts of components (such as gypsum) normally used in a cement. Furthermore, a combination of two or more of these can also be used. From the viewpoint of enhancing the initial strength development, it is preferable to select ordinary portland cement or high early strength portland cement, but blast furnace cement or fly ash cement having low initial strength development can also be used.

In the cement, from the viewpoint of production cost and strength development, the Blaine specific surface area is preferably 2,500 to 7,000 cm²/g, more preferably 2,750 to 6,000 cm²/g, and still more preferably 3,000 to 4,500 cm²/g. In the present invention, the Blaine specific surface area is determined in accordance with JIS R 5201:2015 "Physical testing methods for cement".

The content of the high early strength material in the high early strength cement composition is preferably 0.1 to 10 mass%, more preferably 0.3 to 5.0 mass%, and still more preferably 0.5 to 3.0 mass%. When the content of the high early strength material in the high early strength cement composition is within the above range, the fluidity retention, setting property, and finishability of the hydraulic material can be further improved.

It is preferable that the high early strength cement composition according to the present embodiment further contains at least one selected from the group consisting of slag, silica fume, metakaolin, allophane, and fly ash. The above substances are substances generally called supplementary cementitious materials (SCMs).

The high early strength cement composition preferably contains the SCMs in an amount of 20 to 100 mass%, more preferably 30 to 60 mass%, and still more preferably 40 to 50 mass% with respect to the cement in the high early strength cement composition. When the content ratio of SCMs is within the above range, it is easy to improve the fluidity retention, setting property, and finishability.

The high early strength cement composition preferably further contains a water reducing agent. The water reducing agent is not particularly limited, and examples thereof include a naphthalene-based water reducing agent, a melamine-based water reducing agent, an aminosulfonic acid-based water reducing agent, and a polycarboxylic acid-based water reducing agent. In the present invention, one or more of these water reducing agents can be used.

The content of the water reducing agent is preferably 0.1 to 3.0 parts by mass, more preferably 0.3 to 2.5 parts by mass, and still more preferably 0.5 to 2.0 parts by mass with respect to 100 parts by mass of the high early strength cement composition.

The high early strength cement composition can contain a calcium aluminate clinker. By incorporation of the calcium aluminate clinker in the high early strength cement composition, it is easy to improve the setting property. The calcium aluminate clinker contains CaO and Al₂O₃ as main components and has hydration activity, and may be a compound in which CaO and/or Al₂O₃ is partially substituted with an alkali metal oxide, an alkaline earth metal oxide, silicon oxide, titanium oxide, iron oxide, an alkali metal halide, an alkaline earth metal halide, an alkali metal sulfate, an alkaline earth metal sulfate, or the like, or a substance containing CaO and Al₂O₃ as main components with small amounts of these solid-solved therein, and calcium aluminate may be either crystalline or amorphous.

The content ratio of the calcium aluminate clinker is preferably 0.1 to 10 parts by mass and more preferably 0.3 to 5.0 parts by mass with respect to 100 parts by mass of the cement in the high early strength cement composition. When the content ratio of the calcium aluminate clinker is within the above range, the setting property is more easily improved.

The high early strength cement composition can contain an alkali metal carbonate. When the high early strength cement composition contains an alkali metal carbonate, the fluidity retention and initial strength development are easily improved. Examples of the alkali metal carbonate include sodium carbonate, potassium carbonate, lithium carbonate, sodium hydrogen carbonate, potassium hydrogen carbonate, and lithium hydrogen carbonate, and combinations of these are also possible.

The content ratio of the alkali metal carbonate is preferably 1 to 6 parts by mass and more preferably 2 to 5 parts by mass in terms of solid content with respect to 100 parts by mass of the cement in the high early strength cement composition. When the content ratio of the alkali metal carbonate is within the above range, the fluidity retention and initial strength development are easily improved.

The high early strength cement composition can contain a siliceous fine powder. When the high early strength cement composition contains a siliceous fine powder, the fluidity retention and initial strength development are easily improved. Examples of the siliceous fine powder include latent hydraulic substances such as granulated blast-furnace slag fine powder, and pozzolanic substances such as fly ash and silica fume, and among them, silica fume is preferable. The type of the silica fume is not limited, but from the viewpoint of fluidity, it is more preferable to use silica fume containing 10% or less of ZrO₂ as an impurity or acid silica fume. The acid silica fume refers to silica fume in which a supernatant liquid when 1 g of silica fume is added to 100 cc of pure water and stirred shows an acidity with a pH of 5.0 or less.

The fineness of the siliceous fine powder is not particularly limited, but usually, the granulated blast-furnace slag fine powder and the fly ash have a Blaine specific surface area in a range of 3,000 to 9,000 cm²/g, and the silica fume has a BET specific surface area in a range of 20,000 to 300,000 cm²/g.

The content ratio of the siliceous fine powder is preferably 1 to 20 parts by mass, more preferably 2 to 15 parts by mass, and still more preferably 3 to 12 parts by mass with respect to 100 parts by mass of the cement in the high early strength cement composition. When the content ratio of the siliceous fine powder is the lower limit value or more, the fluidity retention and initial strength development are easily improved. When the content ratio of the siliceous fine powder is the upper limit value or less, the fluidity retention is more easily improved.

The high early strength cement composition can also contain a defoaming agent as long as it does not adversely affect the performance. The defoaming agent is used to suppress the amount of air that is entrained during mixing. The type of the defoaming agent is not particularly limited as long as it does not significantly adversely affect the strength characteristics of the hardened mortar, and both a liquid form and a powder form can be used. Examples thereof include polyether-based defoaming agents, polyhydric alcohol-based defoaming agents such as esterified products of polyhydric alcohols and alkyl ethers, alkyl phosphate-based defoaming agents, and silicone-based defoaming agents.

The content ratio of the defoaming agent is preferably 0.002 to 0.5 parts by mass, more preferably 0.005 to 0.45 parts by mass, and still more preferably 0.01 to 0.4 parts by mass with respect to 100 parts by mass of the cement in the high early strength cement composition. When the content ratio of the defoaming agent is the lower limit value or more, the defoaming effect can be sufficiently exhibited, and when the content ratio of the defoaming agent is the upper limit value or less, the fluidity retention is easily improved.

In the high early strength cement composition, as long as the performance is not adversely affected, one or two or more of admixtures such as gas foaming substances, AE agents, rust inhibitors, water repellents, antibacterial agents, colorants, antifreeze agents, limestone fine powder, cooled-down blast-furnace slag fine powder, sewage sludge incineration ash or its molten slag, urban waste incineration ash or its molten slag, and pulp sludge incineration ash, thickeners, shrinkage-reducing agents, polymers, and anionic exchangers such as hydrotalcite, and the like can be used as long as they do not substantially inhibit the objects of the present invention.

### [High early strength mortar]

A high early strength mortar according to the present embodiment contains the high early strength cement composition of the present invention.

A fine aggregate used in the high early strength mortar is not particularly limited, and river sand, mountain sand, sea sand, lime sand, silica sand, or the like can be used.

The content ratio of the fine aggregate is preferably 40 to 600 parts by mass, more preferably 50 to 500 parts by mass, and still more preferably 60 to 450 parts by mass with respect to 100 parts by mass of the cement in the high early strength cement composition. When the content ratio of the fine aggregate is within the above range, the fluidity retention and initial strength development can be further improved.

The high early strength mortar can be prepared by kneading the high early strength cement composition, the fine aggregate, and water. The content of water in the high early strength mortar is preferably 10 to 70%, more preferably 14 to 65%, and still more preferably 16 to 60% in terms of water/cement ratio.

### [High early strength concrete]

A high early strength concrete according to the present embodiment contains the high early strength cement composition of the present invention.

The aggregate used in the high early strength concrete is not particularly limited, and as a fine aggregate, river sand, mountain sand, sea sand, lime sand, silica sand, or the like can be used, and as a coarse aggregate, river gravel, mountain gravel, lime gravel, or the like can be used, and crushed sand and crushed stone can also be used.

The content ratio of the aggregate is preferably 40 to 600 parts by mass, more preferably 50 to 500 parts by mass, and still more preferably 60 to 450 parts by mass with respect to 100 parts by mass of the cement in the high early strength cement composition. When the content ratio of the aggregate is within the above range, the fluidity retention and initial strength development can be further improved. In addition, the fine aggregate ratio (the ratio of the fine aggregate to the total aggregate) is preferably 25 to 65%, more preferably 35 to 55%, and still more preferably 40 to 50%.

The high early strength concrete can be prepared by kneading the high early strength cement composition, the aggregate, and water. The content of water in the concrete is preferably 10 to 70%, more preferably 14 to 65%, and still more preferably 16 to 60% in terms of water/cement ratio.

### [Hardened body]

A high early strength mortar hardened body according to the present embodiment is obtained by hardening the high early strength mortar of the present invention. In addition, a high early strength concrete hardened body according to the present embodiment is obtained by hardening the high early strength concrete of the present invention.

The hardened body is obtained by leaving the high early strength mortar or the high early strength concrete to stand so as to cause hardening, but the hardened body can be more efficiently obtained by filling (pouring) the material in a mold after kneading, or directly pouring, spraying, or applying the material to a construction site.

The compressive strength of the hardened body depends on the type of cement to be used, but is preferably 11.0 N/mm² or more, more preferably 13.0 N/mm² or more, and still more preferably 15.0 N/mm² or more, 6 hours after pouring.

### [Method for producing hardened body]

A method for producing a hardened body according to the present embodiment is a method in which a high early strength cement composition containing the high early strength material of the present invention is hardened by steam curing at a maximum temperature of 40 to 80°C for 2 to 8 hours. The method for producing a hardened body preferably includes a kneading step of kneading the high early strength material, a cement, and water, a pouring step of filling the kneaded high early strength cement composition in a mold, and a curing step of curing the high early strength cement composition filled in the mold, in this order.

The kneading method in the kneading step is not particularly limited, and each of the materials may be mixed at the time of construction, or some or all of the materials may be mixed in advance. As a mixing apparatus, any existing apparatus such as a tilting drum mixer, an omni mixer, a Henschel mixer, a V-type mixer, a ProShear mixer, and a Nauta mixer can be used.

The pouring method in the pouring step can be performed by a known method. The temperature of the high early strength cement composition at the time of pouring is preferably 0 to 50°C and more preferably 10 to 40°C. When the temperature of the high early strength cement composition at the time of pouring is within the above range, early demolding of the hardened body can be easily achieved.

The method for producing a hardened body preferably further includes a compaction step after the pouring step. As the compaction method, a known method can be used, but from the viewpoint of workability, it is preferable to use a vibrator. Since the high early strength cement composition containing the high early strength material of the present invention maintains favorable fluidity immediately before pouring, compaction can be easily performed, the high early strength cement composition can be uniformly distributed in the mold, and air bubbles mixed at the time of pouring or the like can be removed.

As the curing method used in the curing step, from the viewpoint of improving productivity, it is preferable to use steam curing using a curing chamber, a heating sheet, or the like. The steam curing is usually performed by raising the temperature of surrounding atmosphere of a target and maintaining a constant temperature while maintaining a moderate humidity. As steam curing conditions, it is preferable that the maximum temperature is 40 to 80°C and the curing time is 2 to 8 hours, it is more preferable that the maximum temperature is 40 to 75°C and the curing time is 2.5 to 7.5 hours, and it is further preferable that the maximum temperature is 45 to 60°C and the curing time is 3 to 7 hours. When steam curing is performed with the maximum temperature of the atmosphere around the high early strength cement composition during steam curing set within the above range and the curing time set within the above range, early demolding of the hardened body can be easily achieved.

The relative humidity around the high early strength cement composition during steam curing is preferably 50% RH or more, more preferably 75% RH or more, and still more preferably 90% RH or more. The upper limit is not limited, but may be 100% RH. When the relative humidity around the high early strength cement composition during steam curing is within the above range, early demolding of the hardened body can be easily achieved.

The curing step preferably includes a pre-curing step. As pre-curing conditions, it is preferable to keep the temperature constant at a temperature of 10 to 50°C for about 1 to 3 hours. When the curing step includes the pre-curing step, the temperature inside the poured high early strength cement composition can be made uniform, and it is easy to prevent thermal cracks due to the temperature difference between the inside and the outside.

The curing step preferably includes a heating step. As the heating method, a known method can be used, heating is preferably performed at a temperature increase rate of 10 to 30°C/hr, heating is more preferably performed at a temperature increase rate of 12 to 28°C/hr, and heating is still more preferably performed at a temperature increase rate of 15 to 25°C. When the temperature increase rate in the heating step is within the above range, hardening can be accelerated while preventing thermal cracks due to a sudden increase in temperature of the high early strength cement composition.

The curing step preferably includes a temperature maintaining step. As the temperature maintaining method, a known method can be used, and a constant temperature is maintained preferably in a temperature range of 40 to 80°C for 1 to 8 hours, more preferably in a temperature range of 40 to 75°C for 1 to 6 hours, and still more preferably in a temperature range of 45 to 65°C for 2.5 to 5 hours. By maintaining a constant temperature within the above numerical range in the temperature maintaining step, the poured high early strength cement composition can be uniformly hardened, and early demolding can be easily achieved.

The method for producing a hardened body preferably includes a natural cooling step after the curing step. In the natural cooling step, the hardened body obtained in the curing step is naturally cooled under a normal temperature atmosphere. The cooling time is not particularly limited, but as long as the hardened body can be cooled to a temperature that allows the hardened body to be easily demolded, the cooling time is sufficient to be about 0.5 to 2 hours. By including the natural cooling step after the curing step, thermal cracks of the hardened body can be prevented.

### Examples

Hereinafter, the present invention will be further described based on experimental examples, but the present invention is not limited thereto.

### <Experimental Example 1>

The following calcium formate was used as a calcium formate-based powder, and various high early strength materials were prepared by adjusting the D90 of the calcium formate-based powder to the values shown in Table 1 below through grinding, sieving, and granulation. The SrO content of the high early strength material prepared was measured by XRF using an X-ray fluorescence analyzer ZSX100e (manufactured by Rigaku Corporation), and found to be 0.02%.

A high early strength cement composition was prepared by using the prepared high early strength material and a cement, and mixing such that the amount of the high early strength material was 2.0 mass%. A high early strength concrete was prepared by using the obtained high early strength cement composition, a fine aggregate, a coarse aggregate, and water, and mixing such that the water/cement ratio was 37.5% and the fine aggregate ratio was 42% (Table 1 No. 1-2 to 6). A concrete containing no high early strength material was prepared in the same manner by using a cement, a fine aggregate, a coarse aggregate, and water, and mixing such that the water/cement ratio was 35% (Table 1 No. 1-1). Each of the obtained concretes was subjected to measurement of air content, slump change, compressive strength, setting property, and finishability. The results are also shown in Table 1 below.

### (Materials used)

Calcium formate: reagent.

Cement: ordinary portland cement (commercially available product), Blaine specific surface area: 3,200 cm²/g, specific gravity: 3.15 g/cm³.

Water: tap water.

Fine aggregate: sand from Himekawa river system, Itoigawa-shi, Niigata-ken, maximum dimension: 5 mm or less, density: 2.62 g/cm³.

Coarse aggregate: crushed stone from Itoigawa-shi, Niigata-ken, maximum dimension: 25 mm, density: 2.67 g/cm³.

### (Measurement items)

Air content: Measurement was performed in accordance with the method specified in JIS A 1116:2019 "Method of test for unit mass and air content of fresh concrete by mass method".

Slump change: In accordance with the method specified in JIS A 1101:2020 "Method of test for slump of concrete", the slump immediately after kneading and the slump after leaving to stand for 30 minutes after kneading were measured, and the change in slump was calculated.

Compressive strength: In accordance with the method specified in JIS A 1108:2018 "Method of test for compressive strength of concrete", the compressive strength was measured using a cylindrical test specimen of φ100 × 200 cm.

Setting property: In accordance with the method specified in JIS A 1147:2019 "Method of test for time of setting of concrete mixtures by penetration resistance", the time at which the penetration resistance value reached each of 1.0 N/mm² and 3.5 N/mm² was measured.

Finishability: A concrete was poured in a container of 350 mm (length) × 245 mm (width) × 90 mm (height) (about 7.7 L), and 60 minutes after pouring, the container was tilted at a gradient of about 40° to visually inspect sagging of the concrete, which was then evaluated on a three-level scale. One showing no sagging (segregation) or water bleeding of the concrete and no sagging even when a trowel was applied to the concrete was rated as good (○); one showing little sagging or water bleeding of the concrete but exhibiting sagging when a trowel was applied to the concrete was rated as poor (△); and one showing sagging or water bleeding of the concrete was rated as unacceptable (×).

### [Table 1]

**Table 1**

| No. | D90 (µm) | Median diameter (µm) | Air content (%) | Slump change (cm) | Compressive strength (N/mm²) | Setting property (min) | | Finishability | Remarks |
|---|---|---|---|---|---|---|---|---|---|
| | | | | | | 1.0 N/mm² | 3.5 N/mm² | | |
| 1-1 | - | - | 4.5 | 8.0 | 10.1 | 195 | 240 | × | Reference Example |
| 1-2 | 70 | 50 | 4.0 | 6.0 | 15.1 | 100 | 120 | ○ | Example |
| 1-3 | 300 | 140 | 4.1 | 3.0 | 14.8 | 120 | 148 | ○ | Example |
| 1-4 | 600 | 220 | 4.2 | 4.5 | 14.3 | 132 | 165 | ○ | Example |
| 1-5 | 1200 | 950 | 4.1 | 5.5 | 14.0 | 150 | 184 | ○ | Example |
| 1-6 | 1400 | 1000 | 4.0 | 7.5 | 12.0 | 183 | 220 | △ | Comparative Example |

### <Experimental Example 2>

High early strength concretes were prepared and various measurements were performed in the same manner as in Experimental Example 1 except that high early strength cement compositions were prepared by using the SCMs shown below, and replacing the cements in the high early strength cement compositions at the SCMs replacement rates shown in Table 2 below. The results are also shown in Table 2 below.

### (Materials used)

Slag: manufactured by Esment Kanto Co., Ltd.

Silica fume: manufactured by TOMOE KOGYO CO., LTD.

Metakaolin: manufactured by IMERYS S.A.

Allophane: Allophane (from Tochigi-ken) was fired in an electric furnace at 800°C for 1 hour, followed by rapid cooling.

Fly ash: manufactured by Kyushu Electric Power Co., Inc.

### [Table 2]

**Table 2**

| No. | High early strength cement composition | | Air content (%) | Slump change (cm) | Compressive strength (N/mm²) | Setting property (min) | | Finishability | Remarks |
|---|---|---|---|---|---|---|---|---|---|
| | SCMs | SCMs replacement rate (%) | | | | 1.0 N/mm² | 3.5 N/mm² | | |
| 1-1 | - | - | 4.5 | 8.0 | 10.1 | 195 | 240 | × | Reference Example |
| 1-3 | - | - | 4.1 | 3.0 | 14.8 | 120 | 148 | ○ | Example |
| 2-1 | Slag | 30 | 4.1 | 4.0 | 13.1 | 140 | 180 | ○ | Example |
| 2-2 | Silica fume | 30 | 4.1 | 4.5 | 11.2 | 145 | 190 | ○ | Example |
| 2-3 | Metakaolin | 30 | 4.1 | 6.5 | 12.6 | 148 | 185 | ○ | Example |
| 2-4 | Allophane | 30 | 4.7 | 7.0 | 12.1 | 152 | 194 | ○ | Example |
| 2-5 | Fly ash | 30 | 4.3 | 4.5 | 11.6 | 155 | 198 | ○ | Example |

### <Experimental Example 3>

A high early strength cement composition was prepared by using the high early strength material prepared in Experimental Example 1 and a cement, and mixing such that the amount of the high early strength material was 2.0 mass%, and adding a water reducing agent in an amount of 0.5% with respect to the weight of the cement. A high early strength mortar was prepared by using the prepared high early strength cement composition such that the water/cement ratio was 35%, and the ratio of a cement to a fine aggregate was 1 : 1.5 (mass ratio).

The prepared high early strength mortar was filled in a mold having a dimension of 4 × 4 × 16 cm, and then steam curing was performed to obtain a high early strength mortar hardened body. As the steam curing conditions, pre-curing was performed at 20°C for 1 hour, followed by a temperature increase at a rate of 20°C/hr for 1.5 hours, a temperature retention at 50°C for 3 hours, and natural cooling for 0.5 hours. The obtained high early strength mortar hardened body was subjected to various measurements. The results are shown in Table 3 below.

### (Materials used)

Cement: ordinary portland cement (commercially available product), Blaine specific surface area: 3,200 cm²/g, specific gravity: 3.15 g/cm³.

Water: tap water.

Fine aggregate: river sand from Himekawa river system, Niigata-ken.

Water reducing agent: polycarboxylic acid-based high-performance water-reducing agent (commercially available product).

### (Measurement items)

Mortar flow change rate: In accordance with the method specified in JIS R 5201:2015 "Physical testing methods for cement", the flow value of the mortar immediately after kneading and the flow value of the mortar after leaving to stand for 30 minutes after kneading were measured, and the mortar flow change rate was calculated as: (Mortar flow change rate) = (1 - (flow value at 30 minutes after kneading)/(flow value immediately after kneading)) × 100.

Compressive strength: In accordance with the method specified in JIS R 5201:2015 "Physical testing methods for cement", the compressive strength at the material age of 6 hours after the end of steam curing (immediately after demolding) was measured.

Setting property: In accordance with the method specified in JIS R 5201:2015 "Physical testing methods for cement", the time at which the penetration resistance value reached each of 1.0 N/mm² and 3.5 N/mm² was measured.

### [Table 3]

**Table 3**

| No. | D90 (µm) | Mortar flow change rate (%) | Compressive strength (N/mm²) | Setting property (min) | | Remarks |
|---|---|---|---|---|---|---|
| | | | | 1.0 N/mm² | 3.5 N/mm² | |
| 1-1 | - | 6.0 | 18.1 | 180 | 228 | Reference Example |
| 3-1 | 70 | 4.9 | 23.4 | 72 | 96 | Example |
| 3-2 | 300 | 2.5 | 22.8 | 78 | 108 | Example |
| 3-3 | 600 | 3.1 | 22.5 | 85 | 118 | Example |
| 3-4 | 1200 | 3.8 | 22.1 | 90 | 126 | Example |
| 3-5 | 1400 | 4.7 | 20.0 | 115 | 160 | Comparative Example |

### Industrial Applicability

The high early strength material of the present invention can be widely applied to civil engineering and construction fields, such as a concrete hardened body used in the precast method.

## Claims

1. A high early strength material comprising a calcium formate-based powder having a particle diameter (D90) at a cumulative volume of 90% in a cumulative volume particle size distribution measured by a laser diffraction scattering method of 1,200 µm or less.

2. A high early strength cement composition comprising the high early strength material according to claim 1 and a cement.

3. The high early strength material cement composition according to claim 2, further comprising at least one selected from a group consisting of slag, silica fume, metakaolin, allophane, and fly ash.

4. A high early strength mortar comprising the high early strength cement composition according to claim 2 or 3.

5. A high early strength concrete comprising the high early strength cement composition according to claim 2 or 3.

6. A high early strength mortar hardened body obtained by hardening the high early strength mortar according to claim 4.

7. A high early strength concrete hardened body obtained by hardening the high early strength concrete according to claim 5.

8. A method for producing a hardened body, the method comprising hardening a high early strength cement composition containing the high early strength material according to claim 1 by steam curing at a maximum temperature of 40 to 80°C for 2 to 8 hours.
